# EUROPEAN PATENT APPLICATION

(11) **EP 4 692 917 A1**
(43) Date of publication of application: **11.02.2026**
(21) Application number: 24306349.2
(22) Date of filing: 09.08.2024
(51) Int. Cl.: G02F 1/1524

(54) **NICKEL TUNGSTEN ZIRCONIUM OXIDE FOR ELECTROCHROMIC DEVICES**

(71) Applicant: SAINT-GOBAIN GLASS FRANCE, 92400 Courbevoie (FR)
(72) Inventor: PATISSIER, Amaury, 93300 Aubervilliers (FR); DUBRENAT, Samuel, 93300 Aubervilliers (FR); FOUQUES, Axel, 93300 Aubervilliers (FR); FOURMENTAL, Cynthia, 93300 Aubervilliers (FR)
(74) Representative: Saint-Gobain Recherche

(57) **Abstract**

A compound having a formula Liₐ(NiₓW₁₋ₓ)_{1-y}Zr_{y}O_{b}, wherein 0.5≤x<1, 0<y<1, 0<a<10, 0<b<10 and having nanocrystals dispersed in an amorphous matrix, the nanocrystals all having a d-spacing < 2.5 Å.
Counter-electrode (22) comprising the compound, electrochromic device (10) comprising the counter-electrode, and double-glazing unit comprising the electrochromic device.
Method for forming a layer of the compound and method for preparing the electrochromic device.

## Description

### BACKGROUND OF THE INVENTION

The invention relates to the field of electrochemical devices with electrically controllable optical and/or energy properties, which devices are commonly referred to as "electrochromic devices", in particular a counter-electrode for an electrochromic device and material thereof.

The variation in transmission generally occurs in the optical domain (infrared, visible, ultraviolet).

The optical transmission and/or optical reflectivity of electrochromic coatings may be varied repeatedly and reversibly between low and high transmission states, i.e., between a clear state (high transmission state) and a dark state (low transmission state), and/or between low and high reflectivity, by applying an electrical potential between the top surface and bottom surface of the electrochromic coating. In the specialized application to architectural windows, or windows comprising the exterior envelopes of buildings, electrochromic coatings on the window glass may be used to control the amount of sunlight and/or solar heat that enters the building. This control may extend from ultraviolet wavelengths into the infrared, and/or in other domains of the electromagnetic spectrum, to modulate the entire solar spectrum of sunlight that typically reaches habitable buildings and hence such devices are said to have variable optical and/or energy properties, the optical domain not necessarily being the only domain concerned.

From a thermal point of view, glazing which absorption may be modified in at least one part of the solar spectrum make it possible to control solar gain inside rooms or compartments when they are fitted as external glazing in buildings or windows in means of transport such as cars, trains or aircraft, and to avoid excessive heating of the latter in the event of strong sunlight.

From an optical point of view, such glazing enables the degree of vision to be controlled, thus reducing glare when mounted on external glazing in bright sunlight. They may also have a particularly interesting shutter effect, both as exterior glazing and when used as interior glazing, for example to equip interior partitions between rooms (offices in a building), or to insulate compartments in trains or aircraft, for example.

From a structural point of view, and in a known manner, an electrochromic stack comprises two electrodes sandwiched between two transparent electroconductive layers. At least one of these electrodes comprises an electrochromic material which, by definition, is adapted to reversibly and simultaneously insert ions and electrons. The oxidation states corresponding to the inserted and de-inserted states are of distinct coloration, one of the states exhibiting higher light transmission than the other. The insertion or de-insertion reaction is controlled by means of two transparent conductive layers powered by a current or voltage generator.

A first electrode, called the working electrode, is made of a cathodic electrochromic material adapted to capture ions when a voltage is applied across the electrochromic system. The dark state of the working electrode corresponds to its most reduced state. Cathodic materials darken from high to low optical transmission when they are electrochemically reduced, by supplying them with electrons and charge balancing positive ions at a low, reducing electrical potential.

Associated with this working electrode is a second, so-called anodic counter-electrode, which is also capable of reversibly inserting cations, symmetrically with respect to the working electrode. In other words, this counter-electrode is thus adapted to release ions when a voltage is applied across the electrochromic system. This counter-electrode is made up of a layer that is preferably neutral in coloration, or at least little coloured when the working electrode is in the clear state, and preferably has a coloration in the oxidized state so as to increase the total contrast of the electrochromic stack, between its dark state and its clear state. Anodic materials darken when they are electrochemically oxidized, by depleting them of electrons and charge balancing positive ions at a high, oxidizing electrical potential. In general, in the clear state, counter-electrode tends to exhibit a light yellow colour.

The working electrode and counter-electrode are separated by an interfacial region commonly referred to as the "electrolyte" (Ion-Conductor (IC)), which has the dual function of ionic conductor and electrical insulator, although this may be optional. The ion-conducting layer prevents any short-circuit between the working electrode and the counter-electrode. It also enables both electrodes to retain a charge and thus maintain their clear and dark states.

Such an electrolyte may be formed by depositing a distinct intermediate layer between the working electrode and the counter-electrode. The boundaries between these three layers are defined by abrupt changes in composition and/or microstructure. Such electrochromic stacks therefore have at least three distinct layers separated by two distinct abrupt interfaces.

Alternatively, the working electrode and the counter-electrode may be deposited one on top of the other and generally in contact with each other, and a transition region acting as an electrolyte is formed only subsequently, by migration of components within the electrodes during the manufacturing process and in particular during the heat treatment phases of the stack.

The two conductive layers are arranged on either side of the electrodes.

The electrochromic device thus comprises two distinct sub-assemblies: a cathodic sub-assembly comprising the working electrode, and an anodic sub-assembly comprising the counter-electrode.

High performance electrochromic coatings must withstand the harsh conditions of intense sunlight and wide variation in temperature that are typically endured by architectural windows, while retaining their ability to cycle between low transmission and high transmission modes, without any degradation in the colour or level of transmission for either the low or high transmission mode, over the course of a suitable long service life, say 20 years or about 20000 cycles between modes.

There remains a need for improved electrochromic coatings, and in particular electrochromic coatings that comprises solid state, inorganic films, and metal oxide or metal oxide-containing thin films.

### SUMMARY OF THE DISCLOSURE

The present disclosure aims to remedy at least part of these drawbacks.

Therefore, according to embodiments of the present disclosure, a compound is provided. The compound has a formula Liₐ(NiₓW₁₋ₓ)_{1-y}Zr_{y}O_{b}, wherein 0.5≤x<1, 0<y<1, 0<a<10, 0<b<10 and having nanocrystals dispersed in an amorphous matrix, the nanocrystals all having a d-spacing < 2.5 Å.

The compound comprises nanocrystals of Li_{w}NiO_{z} cubic phase dispersed in the amorphous matrix containing lithium, tungsten, nickel, zirconium, and oxygen. As nanocrystals it is intended ordered crystalline domains dispersed in the amorphous matrix.

The compound allows for obtaining a lower light transmission when electric current is applied to the compound, the higher the zirconium content, i.e., the higher the value of y, the lower the light transmission in the dark state. Compared to compound of the known prior art without combination of tungsten and zirconium, at equivalent content of active atoms, the value of the light transmission in the dark state is higher for the compound comprising both tungsten and zirconium. Therefore, for a given light transmission value in the dark state, the thickness of the compound comprising both tungsten and zirconium would be smaller than the thickness of compounds comprising either tungsten or zirconium. Thanks to the reduced thickness of the compound for a given light transmission value in the dark state, the coloration of the compound in the clear state is reduced, i.e., the b* value is lower, the zirconium content having little to no impact on the coloration of the counter-electrode layer in the clear state. Thus, the electrochromic device comprising a counter-electrode comprising the compound having both tungsten and zirconium shows less yellowness than an electrochromic device comprising a counter-electrode comprising a compound having either tungsten or zirconium in the clear state.

The compound is for a counter-electrode for an electrochromic device.

In some embodiments, d-spacing is d₁₁₁.

In some embodiments, 0.6≤x≤0.8.

In some embodiments, 0.2≤y.

In some embodiments, 0.3≤y.

In some embodiments, the nanocrystals have a size equal to or greater than 1 nm and equal to or smaller than 12 nm.

The smaller the nanocrystals size, the better the electrochemical properties of the compound. It is believed that the conductivity/diffusivity of lithium in the nickel oxide phase increases when the size of the nanocrystals decreases. Indeed, it is believed that when the size of nanocrystals is greater than 12 nm, the lithium cannot reach the centre of the nanocrystals and react with all the available nickel.

Tungsten is believed to prevent growth of NiO crystals during the deposition of the compound.

Nanocrystals size is measured by X-ray diffraction using the Scherrer equation for determining the means size of the ordered crystalline domains, which may be smaller or equal to the grain size, which may be smaller or equal to the particle size.

In some embodiments, the nanocrystals have a size equal to or greater than 3 nm and equal to or smaller than 10 nm.

In some embodiments, the nanocrystals have a size equal to or greater than 5 nm and equal to or smaller than 8 nm.

According to embodiments of the present disclosure, a counter-electrode for an electrochromic device is provided. The counter-electrode comprises a layer of the above-defined compound.

In some embodiments, the counter-electrode has a thickness equal to or greater than 80 nm and equal to or smaller than 500 nm.

In some embodiments, the thickness is equal to or greater than 100 nm and equal to or smaller than 320 nm.

In some embodiments, the thickness is equal to or greater than 120 nm and equal to or smaller than 270 nm.

The thickness of the counter-electrode is variable depending on the application sought for the electrochromic device and the transmission range desired.

In some embodiments, the counter-electrode comprises a buffer layer.

The counter-electrode may comprise the compound layer and the buffer layer.

As non-limiting example, the buffer layer may be located between the ion conductor layer and the compound layer.

According to some embodiments of the present disclosure, an electrochromic device is provided. The electrochromic device comprises the above-defined counter-electrode.

The electrochromic device generally comprises a substrate and various active layers deposited on the substrate. Starting from the substrate, the active layers are as follows: a first transparent conductive layer, an electrochromic layer, an ion conductor layer, a counter-electrode and a second transparent conductive layer. The counter-electrode and the electrochromic layer may be reversed in the electrochromic device. However, the polarity of the applied potential must be adjusted to ensure that the correct polarity for the layers is maintained.

The counter-electrode comprises the compound layer.

In some embodiments, the electrochromic device comprises an optical tuning layer sandwiched between the substrate and the first transparent conductive layer.

In some embodiments, the electrochromic device comprises an optical tuning layer deposited on the second transparent conductive layer.

In some embodiments, the electrochromic device comprises passive layers used for providing moisture or scratch resistance deposited on top of the active layers.

The electrochromic devices described herein could be incorporated into an insulated glazing unit, as known to those of ordinary skill in the art.

The electrochromic device described herein could be coupled with radiation sensors (e.g., visible and solar) and energy management systems to automatically control their transmission and reflection.

The electrochromic device as described herein may be powered with solar cells, thermoelectric sources, wind generators, etc., to make them self-sustaining. These may be also coupled into charge storage devices such as batteries, rechargeable batteries, capacitors or other means. The charge storage devices could be utilized as automatic backup power source when primary source of power is interrupted.

The electrochromic device may also be used as filters in displays or monitors for reducing the ambient light intensity, e.g., sun glare that is incident on the monitor or display surface. Thus, the device may be employed to enhance the image quality of displays and monitors, particularly in well-lit conditions.

As non-limiting examples, the substrate may comprise transparent glass, plastic, a laminate, an electrochromic device, a thin film, or a metal.

Non-limiting examples of plastic are, for example, acrylic, polystyrene, polycarbonate, polyethylene terephthalate, allyl diglycol carbonate [CR39 available from PPG Industries, Pittsburgh, Pa.], SAN [styrene acrylonitrile copolymer], poly(4-methyl-1-pentene), polyester, polyamide, etc.

If plastic is employed, it is preferably abrasion protected and barrier protected using a hard coat of, for example, a silica/silicone anti-abrasion coating, a diamond-like protection coating or their like, such as is well known in the plastic glazing art.

It is preferable for the glass substrate to be either clear or tinted soda lime glass, preferably float glass.

In some embodiments, the substrate has a thickness equal to or greater than 0.01 mm and equal to or smaller than 10 mm, and preferably equal to or greater than 0.1 mm and equal to or smaller than 5 mm.

However, any substrate of any thickness which will provide a functioning electrochromic device may be employed.

As non-limiting examples, the transparent conductive layer(s) may comprise silver, indium oxide, indium tin oxide, doped indium oxide, tin oxide, doped tin oxide, zinc oxide, doped zinc oxide, ruthenium oxide, doped ruthenium oxide and the likes, as well as all thin metallic coatings that are substantially transparent, such as transition metals including gold, silver, aluminum, nickel alloy, and the like. It is also possible to employ multiple layer coatings, such as those available from Pilkington under the tradename of TEC-Glass^{®}, or those available from PPG Industries under the tradenames SUNGATE^{®} 300 and SUNGATE^{®} 500. The first transparent conductive layer and/or the second transparent conductive layer may also be composite conductors prepared by placing highly conductive ceramic and metal wires or conductive layer patterns on one of the faces of the substrate and then overcoating this with transparent conductive materials such as indium tin oxide or doped tin oxides. The first transparent conductive layer and/or the second transparent conductive layer may be further treated with appropriate anti-reflective or protective oxide or nitride layers.

The first transparent conductive layer and the second transparent conductive layer may comprise the same material. The first transparent conductive layer and the second transparent conductive layer may comprise different materials.

In some embodiments, the first and/or the second transparent conductive layer(s) has/have a thickness equal to or greater than 5 nm and equal to or smaller than 10000 nm, and preferably equal to or greater than 10 nm and equal to or smaller than 1000 nm.

Any thickness of the first and/or second conductive layer(s) may be employed that provides adequate conductance for the electrochromic device and which does not appreciably interfere with the transmission of light where required. These conductive layers are connected to an electrical power source in a conventional manner.

As non-limiting examples, the electrochromic layer may comprise inorganic, and/or composites of inorganic and organic electrochemically active materials such that the electrochromic layer is capable of receiving ions transferred from the counter-electrode layer. Exemplary inorganic metal oxide electrochemically active materials include WOs, V₂O₅, MoOs, Nb₂O₅, TiO₂, CuO, Ni₂O₃, Ir₂O₃, Cr₂O₃, Co₂O₃, Mn₂O₃, mixed oxides (e.g W-Mo oxide, W-V oxide) and the like. One skilled in the art would recognize that each of the aforementioned metal oxides might be appropriately doped with lithium, sodium, potassium, molybdenum, vanadium, titanium, and/or other suitable metals or compounds containing metals.

In some embodiments, the electrochromic layer has a thickness typically equal to or greater than 500 Å and equal to or smaller than 20000 Å, preferably equal to or greater than 3400 Å and equal to or smaller than 5500 Å.

The ion conductor layer may comprise a solid electrolyte capable of allowing ions to migrate through the layer. The ion conductor layer must have a sufficient ionic transport property to allow ions, preferably lithium ions, to migrate through. Any material may be used for an ion conductor provided it allows for the passage of ions from the counter-electrode layer to the electrochromic layer. In some embodiments, the ion conductor layer comprises a silicate-based structure.

As non-limiting examples, suitable ion conductors particularly adapted for lithium ion transmission include, but are not limited to, lithium silicate, lithium aluminum silicate, lithium aluminum borate, lithium borate, lithium zirconium silicate, lithium niobate, lithium borosilicate, lithium phosphosilicate, lithium nitride, lithium aluminum fluoride, and other such lithium-based ceramic materials, silicas, or silicon oxides. Other suitable ion-conducting materials may be used, such as silicon dioxide or tantalum oxide, and a wide selection of complex, garnet-like and/or perovskite-like materials based on lithium-lanthanide-transition metal oxides. The overall ion conductor layer may be comprised of multiple component layers of alternating or differing materials, including reaction products between at least one pair of neighbouring layers.

In some embodiments, the refractive index and thickness of the ion conductor layer are selected to maximize light transmission while minimizing electronic current.

In some embodiments, the ion conductive layer has low or no electronic conductivity.

In some embodiments, the combination of the ion conductor layer and its material interfaces with the neighbouring counter-electrode and electrochromic layers serves to, it is believed, effectively block the flow of electronic current over the electrical potential range of electrochromic operation.

In some embodiments, the ion conductor layer may have a thickness typically equal to or greater than 100 Å and equal to or smaller than 700 Å, preferably equal to or greater than 200 Å and equal to or smaller than 600 Å, and most preferably equal to or greater than 325 Å and equal to or smaller than 475 Å.

The thickness of the ion conductor layer may vary depending on the material.

The compound layer in the counter-electrode is capable of storing lithium and then releasing the lithium for transfer to the electrochromic layer in response to an appropriate electrical potential.

In some embodiment, the compound layer in the counter-electrode is capable of darkening anodically, allowing the material to be used as a complementary counter-electrode for cathodically colouring electrochromic materials such as tungsten oxide.

According to embodiments of the present disclosure, a double-glazing unit is provided. The double-glazing unit comprises the above-defined electrochromic device.

In some embodiments, the double-glazing unit comprises a sheet of glass spaced apart from the electrochromic device by a cavity.

As non-limiting example, the cavity may be filled with argon.

In some embodiments, the sheet of glass and the substrate may comprise the same material.

In some embodiments, the sheet of glass and the substrate may comprise different materials.

According to embodiments of the present disclosure, a method for forming a layer of the above-defined compound is provided. The method comprises a step of depositing the compound and a step of heat treating the compound.

The heat-treatment step does not need to be immediately carried out after the deposition step.

In some embodiments, the step of depositing the compound comprises a step of co-sputtering the compound from two targets, one metallic target comprising Ni, W and Zr and one ceramic target comprising Li₂O under an atmosphere comprising argon and oxygen.

In some embodiments, the step of depositing the compound comprises a step of sputtering the compound from a mixed target comprising Ni, W, Zr and Li under an atmosphere comprising argon and oxygen.

In some embodiments, the target is enriched with lithium relative to the desired compound composition.

This allows to compensate for lithium loss to walls in the sputter chamber.

In some embodiments, the step of depositing the compound comprises a step of depositing Ni, W, Zr and O by reactive magnetron sputtering from a metallic target comprising Ni, W and Zr under an atmosphere comprising argon and oxygen and a further step of depositing metallic lithium by magnetron sputtering from a metallic lithium target under argon atmosphere.

In some embodiments, the atmosphere comprising argon and oxygen comprises between 10vol%-100vol% oxygen in argon.

In some embodiments, the step of depositing the compound is carried out a pressure equal to or greater than 2 mTorr and equal to or smaller than 20 mTorr.

The nanocrystals of the compound may be formed during the step of deposition and/or during the step of heat treating the compound by diffusion of lithium inside the compound.

According to embodiments of the present disclosure, a method for preparing the above-defined electrochromic device is provided. The method comprises the following steps:
- depositing a first transparent conductive layer on a substrate
- depositing one of an electrochromic layer or the counter-electrode on the first transparent conductive layer, thereby providing a first deposited electrode;
- depositing an ion conductor layer on the first deposited electrode;
- depositing the other one of the electrochromic layer or the counter-electrode on the ion conductor layer, thereby providing a second deposited electrode;
- depositing a second transparent conductive layer on the second deposited electrode;
- heat treating the electrochromic layer and the counter-electrode
wherein depositing the counter-electrode comprises the above-defined method for forming a layer of the above-defined compound.

It is understood that the heat treatment step of the method for forming a layer of the compound and the heat treatment step of the method for preparing the electrochromic device are the same steps.

In some embodiments, the heat treatment step is performed before depositing the second transparent conductive layer.

This allows avoiding heat treatment of the second transparent conductive layer that may be deteriorate by the heat-treatment step.

In some embodiments, the electrochromic layer is deposited through wet chemical methods, chemical vapor deposition and/or physical vapor deposition (e.g. sol-gel, metallo-organic decomposition, laser ablation, evaporation, e-beam assisted evaporation, sputtering, intermediate frequency reactive sputtering, RF sputtering, magnetic sputtering, DC sputtering, PVD and CVD and the like). In preferred embodiments, the electrochromic layer is deposited via intermediate frequency reactive sputtering or DC sputtering techniques. In one embodiment, the EC layer 30 is deposited on a heated first conductor layer.

In some embodiments, the ion conductor layer is deposited through wet chemical methods, chemical vapor deposition and/or physical vapor deposition (e.g. sol-gel, metallo-organic decomposition, laser ablation, evaporation, e-beam assisted evaporation, sputtering, intermediate frequency reactive sputtering, RF sputtering, magnetic sputtering, DC sputtering, PVD and CVD and the like). In a preferred embodiment, the ion conductor layer is deposited via a sol gel method or reactive sputtering.

In some embodiment, the method comprises coating the substrate with an optical tuning layer.

When the substrate is coated with the optical tuning layer, the first transparent conductive layer is deposited on the coated substrate, i.e., on the optical tuning layer.

In some embodiment, the method comprises depositing an optical tuning layer on the second transparent conductive layer.

The electrochromic device may comprise one or both optical tuning layer(s). When the electrochromic device comprises both optical tuning layers, the optical tuning layer coating the substrate is a first optical tuning layer and the optical tuning layer deposited on the second transparent conductive layer is a second optical tuning layer.

It is understood that the method for preparing the electrochromic device comprises the method for forming the compound. Indeed, during heat treatment of the stack, the precursor(s) of the compound is/are heat treated and the lithium may diffuse inside the precursors of the compound, thereby forming the compound, and the rest of the stack.

In some embodiments, the method comprises depositing a passive layer used for providing moisture or scratch resistance deposited on top of the active layers or the optical tuning layer.

Each layer may comprise a plurality of layers.

It is intended that combinations of the above-defined elements and those within the specification may be made, except where otherwise contradictory.

It is to be understood that both the foregoing general description and the following detailed description are exemplary and explanatory only and are not restrictive of the disclosure, as claimed.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
Fig. 1 is a schematic view of an electrochromic device according to embodiments of the present disclosure;
Fig. 2 is a mircrograph of a compound according to embodiments of the present disclosure;
Fig. 3 is a schematic representation of Fig. 2;
Fig. 4 is a XRD profile of the compound of Fig. 2 deposited on a tin doped indium oxide coated glass substrate in number of counts (Y-axis) as a function of 20 (X-axis);
Fig. 5 is a flowchart representing a method for forming a compound according to embodiments of the present disclosure;
Fig. 6 is a flowchart representing a method for preparing an electrochromic device according to embodiments of the present disclosure;
Fig. 7 is a schematic view of a double-glazing unit according to embodiments of the present disclosure;
Fig. 8 is a graph representing the visible light transmission (in %) in the dark state of a double-glazing unit according to embodiments of the present disclosure as a function of the content of zirconium (in at%);
Fig. 9 is a graph representing the potential (in V) as a function of the charge (in mC/cm²) for half-cell samples containing only the counter-electrode layer;; and
Fig. 10 is a graph representing b* in the clear state (no unit) as a function of the visible light transmission (in %) in the dark state for the example (solid line) and the comparative example (dash line) for various thicknesses of the counter-electrode layer.

### DETAILED DESCRIPTION OF EMBODIMENTS

Reference will now be made in detail to exemplary embodiments of the disclosure, examples of which are illustrated in the accompanying drawings.

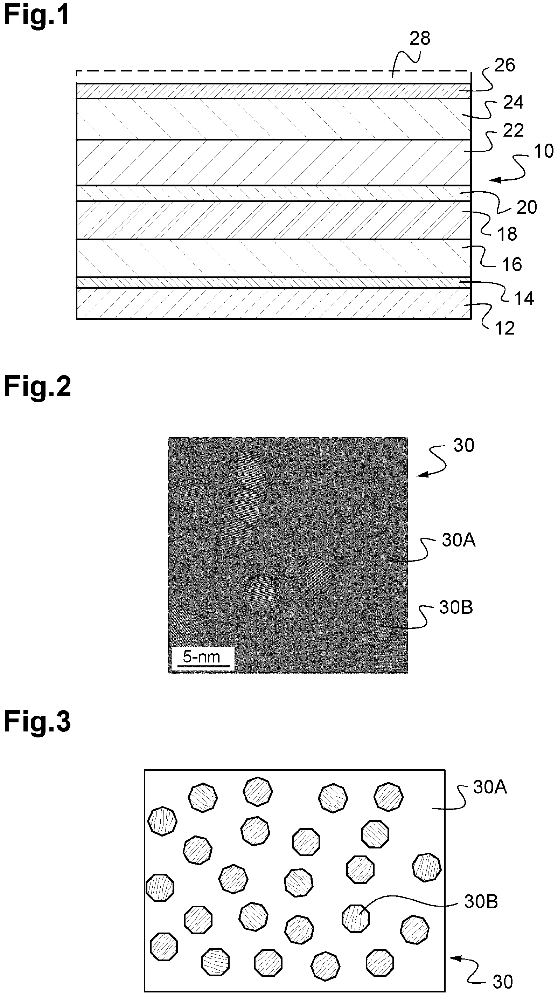

Typically, as shown on Fig. 1, an electrochromic device 10 comprises a substrate 12, and, starting from the substrate 12, a first transparent conductive layer 16, an electrochromic layer 18, an ion conductor layer 20, a counter-electrode 22 and a second transparent conductive layer 24.

In the embodiment of Fig. 1, the electrochromic device 10 also comprises a first optical tuning layer 14 sandwiched between the substrate 10 and the first transparent conductive layer 16, and a second optical tuning layer 26 deposited on the second transparent conductive layer 24. The electrochromic devise 10 may also comprise a passive layer 28 deposited on the second optical tuning layer 26.

The counter-electrode 22 comprises a layer of a compound 30, the compound 30 having a formula Liₐ(NiₓW₁₋ₓ)_{1-y}Zr_{y}O_{b}, wherein 0.5≤x<1, 0<y<1, 0<a<10, 0<b<10.

As shown on Fig. 2, the compound 30 having nanocrystals 30B dispersed in an amorphous matrix 30A. Each nanocrystal 30B of the compound 30 has a d-spacing < 2.5 Å, more specifically a d₁₁₁ < 2.5 Å and a size comprised between 1 nm and 12 nm, for example between 3 nm and 10 nm or between 5 nm and 8 nm, values included. The compound 30 comprises nanocrystals of Li_{w}NiO_{z} cubic phase dispersed in the amorphous matrix containing lithium, tungsten, nickel, zirconium, and oxygen

As shown on Fig. 2, the nanocrystals 30B have size around 5 nm, i.e., smaller than or equal to 6 nm.

As shown on Fig. 2, the compound 30 comprises between 20-80vol% of amorphous matrix 30A.

Fig. 3 is a schematic representation of the micrograph of Fig. 2, showing the compound 30 having nanocrystals 30B dispersed in an amorphous matrix 30A.

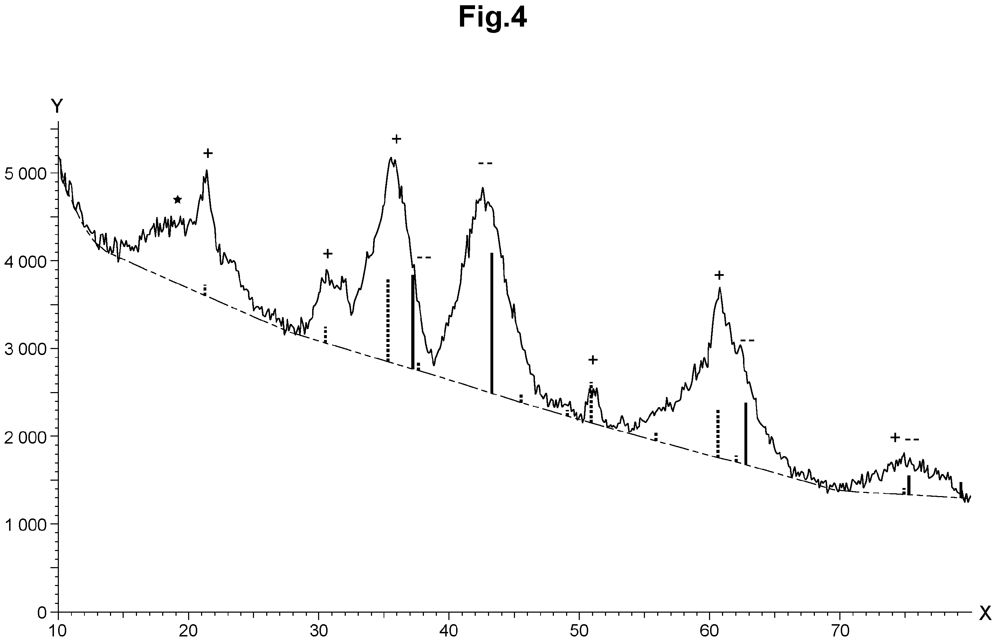

Fig. 4 is a XRD profile of the compound of Fig. 2 deposited on a indium tin oxide coated glass substrate. Fig. 4 represents the number of counts (Y-axis) as a function of 20 (X-axis). On Fig. 4, "--" signs correspond to the Li_{w}NiO_{z} cubic phase nanocrystals 30B in the compound 30, "+" signs correspond to the indium tin oxide conductive layer underneath the compound 30 and "*" sign correspond to the amorphous matrix 30A of the compound 30.

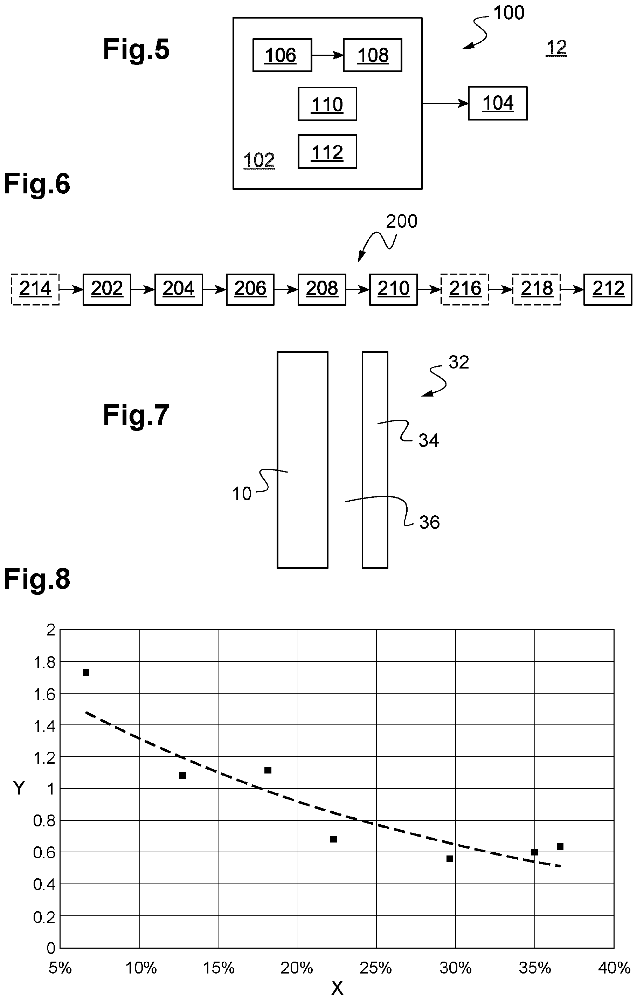

Fig. 5 is a flowchart representing a method 100 for forming a layer of the compound 30 according to embodiments of the present disclosure The method 100 for forming the layer of the compound 30 of Fig. 2 comprises a step of depositing 102 the compound 30 and a step of heat treating 104 the compound.

The step of depositing 102 the compound 30 may comprise a step of depositing Ni, W, Zr and O 106 by reactive magnetron sputtering from a metallic target comprising Ni, W and Zr under an atmosphere comprising argon and oxygen and a further step of depositing metallic lithium 108 by magnetron sputtering from a metallic lithium target under argon atmosphere.

The step of depositing 102 the compound 30 may comprise a step of sputtering the compound 30 from a mixed target 110 comprising Ni, W, Zr and Li under an atmosphere comprising argon and oxygen.

The step of depositing 102 the compound 30 may comprise a step of co-sputtering the compound from two targets 112, one metallic target comprising Ni, W and Zr and one ceramic target comprising Li₂O under an atmosphere comprising argon and oxygen.

The target(s) may be enriched with lithium relative to the desired compound composition.

Fig. 6 is a flowchart representing a method 200 for preparing an electrochromic device 10 according to embodiments of the present disclosure.

The method 200 for preparing the electrochromic device 10 comprises a step of depositing 202 the first transparent conductive layer 16 on the substrate 12, a step of depositing 204 one of the electrochromic layer 18 or the counter-electrode 22 on the first transparent conductive layer 16, thereby providing a first deposited electrode, a step of depositing 206 the ion conductor layer 20 on the first deposited electrode, a step of depositing 208 the other one of the electrochromic layer 18 or the counter-electrode 22 on the ion conductor layer 20, thereby providing a second deposited electrode, a step of depositing 210 the second transparent conductive layer 24 on the second deposited electrode.

The method 200 may comprises a step of depositing 214 the first optical tuning layer 14 on the substrate 12, the first transparent conductive layer 16 being deposited on the coated substrate 12, i.e., on the optical tuning layer 14.

The method 200 may comprises a step of depositing 216 the second optical tuning layer 26 on the second transparent conductive layer 24.

When the electrochromic device 10 comprises both optical tuning layers, the optical tuning layer 14 coating the substrate 10 is a first optical tuning layer and the optical tuning layer 26 deposited on the second transparent conductive layer 24 is a second optical tuning layer.

The method 200 may also comprise a step of depositing a passive layer 218 used for providing moisture or scratch resistance deposited on top of the active layers or the optical tuning layer deposited on the second transparent conductive layer 24.

In the embodiment of Fig. 6, a step of heat treating 212 the stack formed by the successive deposition steps is carried out during which the electrochromic layer 18 and the counter-electrode 22 are heat-treated.

In the electrochromic device 10 of Fig. 1, the step 204 is a step of depositing the electrochromic layer 18 on the first transparent conductive layer 16 and the step 208 is a step of depositing the counter-electrode on the ion conductor layer 20.

When the counter-electrode layer 22 and the electrochromic layer 18 are reversed in the electrochromic device 10, the step 204 is a step of depositing the counter-electrode 22 on the first transparent conductive layer 16 and the step 208 is a step of depositing the electrochromic layer 18 on the ion conductor layer 20.

During the step of heat treating 212 the stack formed by the successive deposition steps, the compound 30 is heat treated. Thus, the step of heat treating 104 the compound 30 of the method 100 is carried out in the step heat treating 212 the stack of the method 200 for preparing the electrochromic device 10.

In an alternative embodiment, the step of heat treating 212 the electrochromic layer 18 and the counter-electrode 22 may be carried out before the step of depositing 210 the second transparent conductive layer 24 on the second deposited electrode.

Fig. 7 is a schematic view of a double-glazing unit 32 according to embodiments of the present disclosure.

As non-limiting example, the double-glazing unit 32 of Fig. 7 comprises the electrochromic device 10 and a sheet of glass 34, the electrochromic device 10 and the sheet of glass 34 being spaced apart by a cavity 36. The cavity 36 may be filled with argon. The substrate 12 of the electrochromic device 10 is facing the exterior of the double-glazing unit 32, the active layers of the electrochromic device 10 facing the sheet of glass 34 and being protected by the substrate 12 and the sheet of glass 34. The sheet of glass 34 may be coated with other materials, leading to different optical properties.

### Example

Substrate 12 = 2 mm float glass;
Sheet of glass 32 = 2 mm float glass;
Cavity 34 = 1 mm thick containing argon;
Layers deposited:
   First optical tuning layer 14: first sub-layer of NbOₓ 25 nm and second sub-layer of SiOₓ 40 nm;
   First transparent conductive layer 16: indium tin oxide 400nm having a resistivity of 7.5 ohms per square meter;
   Electrochromic layer 18: first sub-layer of WOₓ 380 nm and second sub-layer of Li ; Ion conductor layer 20: SiOₓ 12-15 nm;
   Counter-electrode layer 22: Liₐ(NiₓW₁₋ₓ)_{1-y}Zr_{y}O_{b} with x = 0.68, y =0.35, 0<a<10 and 0<b<10+ thickness deposited in two steps with a first sub-layer comprising Ni, W, Zr and O layer with or without Li 255 nm and a second sub-layer of Li;
   Second transparent conductive layer 24: indium tin oxide 405 nm having a resistivity of 7.5 ohms per square meter;
   Second optical tuning layer 26: SiOₓ 65 nm ;
   Heat treatment: first heat treatment at 380°C for 3 min before depositing the counter-electrode layer 22 and second heat treatment at 410°C for 3 min before depositing the second transparent conductive layer 24.

During the heat treatment steps, the deposited layers diffuse in one another.

### Comparative example

The comparative example differs from the example in that the counter-electrode layer comprises no zirconium, y=0.

Fig. 8 is a graph representing the visible light transmission (VLT in %) in the dark state of the double-glazing unit 32 according to embodiments of the present disclosure as a function of the content of zirconium (in at%) in the compound 30 of the counter-electrode 22. As shown on Fig. 8, the visible light transmission in the dark state decreases with increasing content of zirconium, which means that the double-glazing unit 32 comprising zirconium absorbs more light in the dark state with increasing content of zirconium.

The origin of this increase of absorption in the dark state is believed to be due to an increase of the lithium content free to move (mobile lithium) in the double-glazing unit. This increase of mobile lithium indicates that the zirconium modifies the reactions happening in the counter-electrode material during the heat treatment, making more lithium and more nickel atoms available to reacts reversibly during use of the electrochromic stack.

No change of the nanocrystals 30B has been observed on the samples containing the additional zirconium. The size of the nanocrystals 30B is still set by the amount of tungsten in the counter-electrode 22.

**Table 1 shows the values of b* in the clear state (no unit) and the visible light transmission (in %) in the dark state of the double-glazing unit 30 for various zirconium content.**

| Zirconium content (at%) | b* clear state | VLT in the dark state |
|---|---|---|
| 7 | 11.0 | 1.7 |
| 13 | 10.0 | 1.1 |
| 18 | 9.8 | 1.1 |
| 22 | 9.9 | 0.7 |
| 30 | 10.1 | 0.6 |
| 37 | 10.7 | 0.6 |

As shown in Table 1, the content of zirconium in the compound 30 affects mainly the visible light transmission in the dark state and has a very small impact on the b* value in the clear state.

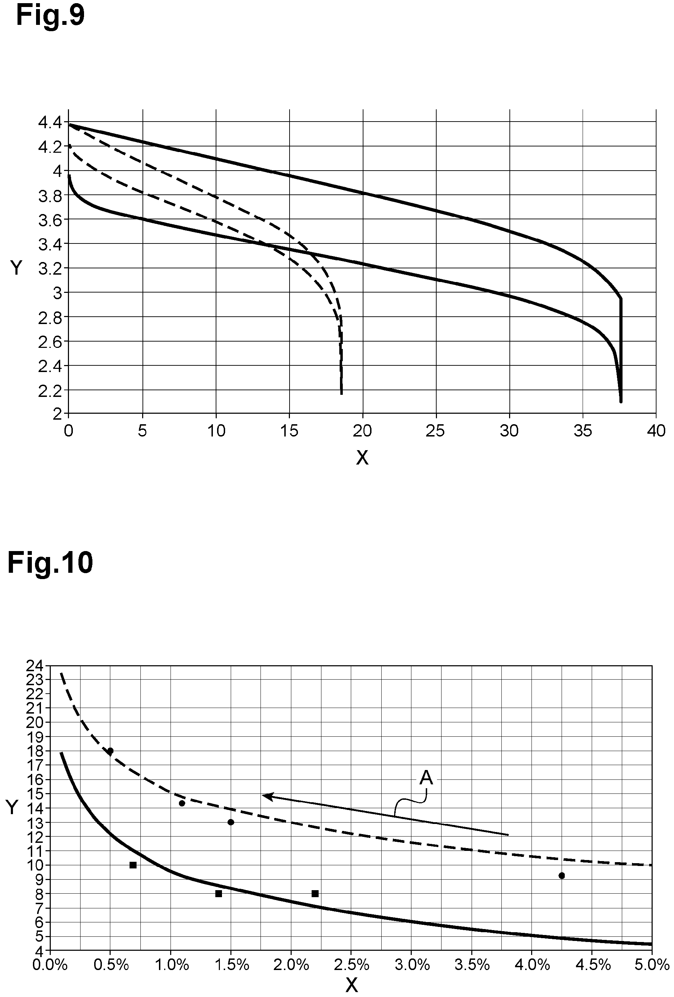

Fig. 9 is a graph representing the potential (in V) as a function of the charge (in mC/cm²) for half-cell samples containing only the counter-electrode 22. Fig. 9 shows the increase of capacity to exchange lithium for the counter-electrode containing zirconium of the example (solid line) compared to the comparative example (dash line) where the compound of the counter-electrode does not contain zirconium. A half-cell sample comprise a layer of the compound 30 deposited on a layer of indium tin oxide, both layers being incorporated in a cell containing liquid electrolyte, the cell comprising a lithium reference electrode and a lithium counter-electrode.

Fig. 10 is a graph representing b* in the clear state (no unit) as a function of the visible light transmission (in %) in the dark state for the example (solid line) and the comparative example (dash line) for various thicknesses of the counter-electrode layer 22. Arrow A show the increasing thickness of the counter-electrode layer 22. Indeed, as the counter-electrode layer 22 increases, the visible light transmission in the dark state decreases and the b* value increases. However, as shown on Fig. 10, for a given visible light transmission in the dark state, the b* value is smaller for the Example than for the Comparative example, which means that for a given visible light transmission in the dark state, the double-glazing unit 30 shows less yellow colouring in the clear state. The parameter b* is measured and calculated according to CIE L*a*b* 1976.

Although the present disclosure refers to specific exemplary embodiments, modifications may be provided to these examples without departing from the general scope of the invention as defined by the claims. Furthermore, individual characteristics of the different illustrated/mentioned embodiments may be combined in additional embodiments. Therefore, the description and the drawings should be considered in an illustrative rather than in a restrictive sense.

## Claims

1. A compound (30) having a formula Liₐ(NiₓW₁₋ₓ)_{1-y}Zr_{y}O_{b}, wherein 0.5≤x<1, 0<y<1, 0<a<10, 0<b<10 and having nanocrystals (30B) dispersed in an amorphous matrix (30A), the nanocrystals (30B) all having a d-spacing < 2.5 Å.

2. The compound (30) according to claim 1, wherein the d-spacing is d₁₁₁.

3. The compound (30) according to claim 1 or 2, wherein 0.6≤x≤0.8.

4. The compound (30) according to any one of claims 1 to 3, wherein 0.2≤y.

5. The compound (30) according to claim 4, wherein 0.3≤y.

6. The compound (30) according to any one of claims 1 to 5, the nanocrystals (30B) having a size comprised between 1 nm and 12 nm.

7. A counter-electrode (22) for an electrochromic device (10) comprising a layer of the compound (30) according to any one of claims 1 to 6.

8. The counter-electrode (22) according to claim 7, having a thickness equal to or greater than 80 nm and equal to or smaller than 500 nm.

9. An electrochromic device (10) comprising a counter-electrode (22) according to claim 7 or 8.

10. A double-glazing unit (32) comprising the electrochromic device (10) according to claim 9.

11. A method (100) for forming a layer of the compound (30) according to any one of claims 1 to 6, comprising a step of depositing (102) the compound (30) and a step of heat treating (104) the compound.

12. The method (100) according to claim 11, wherein the step of depositing (102) the compound (30) comprises a step of depositing Ni, W, Zr and O (106) by reactive magnetron sputtering from a metallic target comprising Ni, W and Zr under an atmosphere comprising argon and oxygen and a further step of depositing metallic lithium (108) by magnetron sputtering from a metallic lithium target under argon atmosphere.

13. A method (200) for preparing the electrochromic device (10) according to claim 9, comprising the following steps:
- depositing (202) a first transparent conductive layer (16) on a substrate (12)
- depositing (204) one of an electrochromic layer (18) or the counter-electrode (22) on the first transparent conductive layer (16), thereby providing a first deposited electrode;
- depositing (206) an ion conductor layer (20) on the first deposited electrode;
- depositing (208) the other one of the electrochromic layer (18) or the counter-electrode (22) on the ion conductor layer (20), thereby providing a second deposited electrode;
- depositing (210) a second transparent conductive layer (24) on the second deposited electrode; and
- heat treating (212) the electrochromic layer (18) and the counter-electrode (22) wherein depositing the counter-electrode (22) comprises the method according to claim 11 or 12 for forming a layer of the compound (30).
